# EUROPÄISCHE PATENTSCHRIFT

(11) **EP 1 411 079 B1**
(45) Veröffentlichungstag und Bekanntmachung des Hinweises auf die Patenterteilung: **26.04.2006**
(21) Anmeldenummer: 03023084.1
(22) Anmeldetag: 15.10.2003
(51) Int. Cl.: C08K 3/00, C08K 3/22, C01F 7/02

(54) **Flammgeschützte Polymerzusammensetzung und deren Verwendung sowie Verfahren zur Herstellung eines Flammschutzmittels**
Flame-proofing polymer composition, its use and preparation of the flame-proofing agent
Composition polymérique ignifuge, son utilisation et préparation de l'agent ignifugeant

(30) Priorität: 16.10.2002 DE 10248174
(43) Veröffentlichungstag der Anmeldung: 21.04.2004
(60) Teilanmeldung: 05007388.1
(73) Patentinhaber: Nabaltec GmbH, 92421 Schwandorf (DE)
(72) Erfinder: Sauerwein, Reiner, Dr., 92449 Steinberg (DE); Prescher, Dieter, Dr., 92421 Schwandorf (DE); Brandl, Josef, 93158 Teublitz (DE); Gokorsch, Hans, 92421 Schwandorf (DE)
(74) Vertreter: Müller-Wolff, Thomas

(56) Entgegenhaltungen:
- EP-A- 1 146 075

## Beschreibung

Die Erfindung betrifft eine flammgeschützte Polymerzusammensetzung sowie ein Verfahren zur Herstellung eines Flammschutzmittels.

In der Bau-, Möbel-, Transport- oder Elektro- sowie Elektronikindustrie werden Kunststoffe als Werkstoff eingesetzt. Für viele Anwendungen müssen die Polymeren nationale oder internationale Flammschutznormen erfüllen. Da die meisten Polymeren von sich aus brennbar sind, müssen sie modifiziert werden, um als flammgeschützt eingestuft werden zu können. Im allgemeinen wird dies durch den Zusatz organischer oder anorganischer Flammschutzmittel erreicht. Innerhalb der Vielzahl verschiedener Flammschutzmittel haben Metallhydrate, besonders die des Aluminiums, eine wichtige Bedeutung erlangt (G. Kirschbaum, Kunststoffe, 79, 1999, 1205-1208 und R. Schmidt, Kunststoffe, 88, 1998, 2058-2061).

Die flammschützende Wirkung des Aluminiumhydroxid beruht auf der thermischen Abspaltung des chemisch gebundenen Wassers zwischen 200 - 400°C. Während dieser endothermen Zersetzung des Hydroxids wird Energie verbraucht und damit die Oberfläche des Kunststoffs gekühlt. Zusätzlich verdünnt der freigesetzte Wasserdampf die brennbaren organischen Abbauprodukte des Polymeren. Das als Rückstand verbleibende Aluminiumoxid adsorbiert polyzyklische aromatische Verbindungen, die beim Verbrennen der Polymermatrix entstehen. Da diese Verbindungen Bestandteil von schwarzem Brandrauch sind, trägt Aluminiumhydroxid auch zu einer Reduktion der Rauchgasdichte im Brandfall bei. Bei Einsatz des ungiftigen und halogenfreien Aluminiumhydroxid lassen sich somit halogenfreie und rauchgasarme Kunststoffcompounds herstellen.

Nachteilig sind die hohen Einsatzmengen mit denen Aluminiumhydroxid in Kunststoffen verwendet werden muss, um die diversen Flammschutznormen erfüllen zu können. Aufgrund dieser hohen Füllgrade gestaiten sich Verarbeitungsprozesse solcher flammgeschützten Polymermischungen, wie z.B. die Extrusion, schwierig und die mechanischen Eigenschaften dieser Compounds sind oft ungenügend.

Die Extrusionsgeschwindigkeit während der Beschichtung von Kupferadern oder dem Aufbringen des Kabelmantels auf eine Kabelkonstruktion ist ein wichtiger Kostenfaktor bei der Herstellung von Kabeln. Mit feinstgefällten Aluminiumhydroxiden gefüllte Polymercompounds, die neben den gängigen elektrischen, mechanischen und Flammschutz- Anforderungen eine hohe Extrusionsgeschwindigkeit ermöglichen, sind ein Schlüssel dafür, dass halogenfrei flammgeschützte Kabel weitere Marktanteile gegenüber alternativen Technologien gewinnen.

Eine Möglichkeit zur Verbesserung ist, auf das Aluminiumhydroxid eine Schicht aus organischen Additiven z.B. Silane, Titanate aufzubringen. Arbeitet man diese beschichteten (gecoateten) Aluminiumhydroxide in Thermoplaste ein, erreicht man deutlich höhere Extrusionsgeschwindigkeiten.

Aufgabe der vorliegenden Erfindung ist es, eine Polymerzusammensetzung mit üblich hohen Füllgraden an feinstgefälltern Alumiuniumhydroxid zu finden, weiche die oben beschriebenen Nachteile nicht zeigt, sondern bei Füllgraden bis 80% noch gut verarbeitbar ist. Das Herstellverfahren ist im Vergleich zu Coatierungsverfahren einfach und kostengünstig.

Dieses Ziel wurde durch den Einsatz von feinst gefälltem Aluminiumhydroxid erreicht, das einer speziellen Mahltrocknungsprozedur unterzogen wurde. Das verwendete Mahltrocknungsaggregat besteht aus einem fest auf einer massiven Welle montierten Rotor, der sich mit hoher Peripheriegeschwindigkeit dreht. Diese Drehbewegung in Verbindung mit einem hohen Luftdurchsatz versetzt die durchströmende Heißluft in extrem schneile Luftwirbel, die das Trocknungsgut aufnehmen, es beschleunigen und es so fein verteilen, dass eine vergrößerte Oberfläche geschaffen wird. Die in Turbulenz versetzten Aluminiumhydroxidpartikel verlassen nach voilständigem Abtrocknen das Mahltrocknungsaggregat und werden von der Heißluft sowie den Brüden abgetrennt. Die Umfangsgeschwindigkeit des Rotors beträgt zwischen 40 - 140 m/Sek. Die zur Trocknung verwendete Heißluft hat eine Temperatur von 150 - 450°C. Es können bekannte Mahltrocknungsaggregate verwendet werden, siehe bspw. Lueger, Lexikon der Technik, Bd 48, S.394.

Die auf diese Weise erhaltenen Feinsthydroxidpulver zeichnen sich durch eine sehr niedrige Ölaufnahme aus. Der Vergleich mit kommerziell erhältlichen Produkten zeigt beim erfindungsgemäßen Produkt eine um mindestens 20% niedrigere Ölaufnahme. Dies ist gültig für den Vergleich mit Produkten, die eine vergleichbare Feinheit und eine vergleichbare oder sogar größerer spezifischer Oberfläche nacht BET (Brunnauer, Emmet, Teller - Methode) besitzen.

Röntgendiffraktometeraufnahmen zeigen bei dem erfindungsgemäßen Aluminiumhydroxid neben der erwarteten Kristallmodifikation Hydrargillit einen Anteil von etwa 1% Böhmit. Dies ist dann der Fall, wenn die Heißlufttemperatur bei der Mahltrocknung > 270°C gewählt wird. Bei den zum Vergleich herangezogenen kommerziell erhältlichen fein kristallinen Aluminiumhydroxiden handelt es sich durchgängig um reine Hydrargillite. Der Böhmitanteil befindet sich beim erfindungsgemäßen Produkt überwiegend an der Oberfläche der Partikel

Untersucht wurde die Wasseraufnahme nach Baumann (H. Baumann, Fette, Seifen, Anstrichmitte, 68, 1966, 741-743). Dieses Verfahren wird herangezogen, um Mineralien und mineralische Füllstoffe nach der Polarität bzw. Hydrophilie abzustufen. Insbesondere wird das Verfahren angewendet, um das oberflächliche Beschichten (Coatieren) von anorganischen Füllstoffen mit organischen Additiven dahingehend zu beurteilen, ob der betreffende Füllstoff ausreichend hydrophobiert wurde. Stoffe, die viel Wasser je Masseneinheit Füllstoff aufnehmen sind demnach hydrophiler als solche die geringere Mengen Wasser aufnehmen. Es wurden die erfindungsgemäßen Flammschutzmittel mit kommerziellen Standardprodukten verglichen. Die erfindungsgemäßen Aluminiumhydroxide zeigen eine um 36% bzw. 27% niedrigere Wasseraufnahme als die kommerziellen Vergleichsprodukte.

Die nach dem oben beschriebenen Verfahren hergestellten Produkte ließen sich einfacher in Polymere einarbeiten und führten zu besseren rheologischen Eigenschaften der Mischung als bei bisher kommerziell erhältlichen Vergleichsprodukten. Es wurde erkannt, dass die eingesetzten mineralischen Füllstoffe hydrophober als die bisher verwendeten Füllstoffe sind. Überraschenderweise zeigten die neuen Füllstoffe eine bessere Verträglichkeit mit der Polymermatrix. Je geringer die Ölaufnahme, desto weniger Polymer wird für die Benetzung der Mineraloberfläche benötigt. Wird weniger Polymeres für die Benetzung der Mineraloberfläche verbraucht, stehen mehr Polymerketten im Inneren der Matrix zum gegeneinander Abgleiten zur Verfügung. Im Resultat zeigen Polymermischungen mit Füllstoffen niedriger Ölzahl niedrigere Viskositäten als solche, die mit Füllstoffen mit hoher Ölzahl hergestellt wurden. Dies gilt für Polymerschmelzen und für bei Raumtemperatur flüssige Reaktivharze vor der vollständigen Vernetzung, auch bei hohen Füllgraden von bis zu 80%.

Arbeitet man das so charakterisierte Produkt in ein ungesättigtes Polyesterharz (kurz: UP-Harz) ein, stellt man sehr viel niedrigere Viskositäten fest als bei Mischungen, die kommerziell erhältliche Vergleichsprodukte in gleicher Konzentration enthalten. Entsprechend lassen sich mit dem erfindungsgemäßen Produkt auch höher gefüllte Mischungen darstellen, die noch sehr gut fließen. Vergleicht man relative Viskositäten, so zeigt das erfindungsgemäße Produkt bei 50 Gew-% Füllgrad eine um rund 60% niedrigere Viskosität als die Standardprodukte.

Wenn das nach der oben beschriebenen Methode getrocknete Aluminiumhydroxid über Schmelzeverfahren in eine thermoplastische Polymermatrix eingearbeitet wird, zeigen sich im resultierenden Compound die erwartet niedrigen Schmelzeviskositäten, bestimmt als Schmelzeindex. Dieser Effekt zeigt sich mit und ohne Verwendung von gängigen niedermolekularen Phasenvermittlern, wie die am Beispiel eines Ethyl-vinylacetatcopolymeren (kurz: EVA oder EVA-Copolymer) und eines Aminosilans untersuchten Konzentrationsreihen zeigen (siehe Beispiel 4)). Dabei wurden feste Verhältnisse von Füllstoff und Polymer, aber variierende Anteile an Aminosilan gewählt. Verglichen wurde das erfindungsgemäße Produkt mit kommerziell erhältlichen Standardprodukten. Wie erwartet, zeigt das Produkt, welches Bestandteil der Erfindung ist, über den gesamten Bereich einen deutlich erhöhten Schmelzeindex. Die prozentuale Erhöhung bezogen auf das Standardprodukt liegt zwischen 20 - 40%.

Auf Basis des beschriebenen Aluminiumhydroxids wurden Polymercompounds hergestellt, welche als einfache Basispolymermischungen anwendungstechnische Bedeutung für die Verwendung als halogenfrei flammgeschütztes Kabelmantel- oder Kabelisolationsmaterial besitzen. Neben den sehr guten mechanischen und flammwidrigen Eigenschaften, zeigt das resultierende Kunststoffcompound exzellente Schmelzeflusseigenschaften. Verglichen mit Standardprodukten aus der Gruppe der kommerziell erhältlichen feinst kristallinen Aluminiumhydroxide ist dieser höhere Schmelzflussindex bzw. die niedrigere Viskosität besonders auffällig.

Diese stark verbesserten Schmelzflusseigenschaften bei hoch gefüllten Compounds ist Grundvoraussetzung dafür, hohe Extrusionsgeschwindigkeiten beim Aufbringen dieser flammgeschützten Werkstoffe auf elektrische Leiter zu ermöglichen. Im Beispiel 9) sind die bei Extrusion zweier Kunststoffmischungen auf einen Kupferleiter erhaltenen Ergebnisse gezeigt. Bei der Verarbeitung der das erfindungsgemäße Produkt enthaltenden Mischung, wurde im Vergleich zum Compound, das ein kommerziell erhältliches Vergleichsprodukt enthielt, ein niedrigerer Schmelzedruck und eine niedrigere Schmelzetemperatur bei ansonsten konstanten Parametern, also gleicher Extruderschneckendrehzahl und Abzugsgeschwindigkeit, festgestellt. Dieses Ergebnis bedeutet für die mit der Extrusion vertrauten Fachpersonen, dass diese Mischung durch Erhöhung der Schneckendrehzahl bei höheren Extrusions- bzw. Abzugsgeschwindigkeiten zu isolierten Drähten bzw. Kabeln verarbeitet werden kann.

Als Option zu den niedrigen Schmelzeviskositäten bei normal hohen Füllgraden kann man auch den Füllgrad weiter erhöhen, um noch besser flammgeschützte Polymerzusammensetzungen zu erhalten. Dabei können die Schmelzeviskosität und die mechanischen Eigenschaften aber auf einem üblichen Niveau gehalten werden, was bei Verwendung von Standardprodukten nicht möglich ist.

Im Folgenden wird die Erfindung anhand mehrerer Beispiele näher erläutert. Beispiele 1 und 2 zeigen erfindungsgemäße Produkte und ihre Herstellung.

Die Beispiele 3 bis 9 enthalten Vergleichsbeispiele, aus denen sich die Vorteile der erfindungsgemäßen Produkte ergeben.

### Beispiele

### Beispiel 1) und 2) beschreiben die Herstellung der erfindungsgemäßen Produkte.

### Beispiel 1)

Der Filterkuchen eines fein kristallisierten Aluminiumhydroxids mit einer spezifischen Oberfläche von ca. 3m²/g und einer Restfeuchte von ca. 50 Gew.-% wurde in ein Mahltrocknungsaggregat über gängige Förderelemente eingebracht. Der Feststoffeintrag betrug 200kg/h. Heißluft mit einer Eintrittstemperatur von 270 - 290°C wurde zugeführt. Die Luftmenge betrug dabei 5000Bm³/h. Die Umdrehungsgeschwindigkeit des Rotors wurde auf 80 m/Sek. eingeregelt. Das getrocknete Produkt wurde über ein ausreichend dimensioniertes Produktfilter abgeschieden und über Zellenradschleuse ausgetragen.
Tabelle 1) fasst die wichtigsten Eigenschaften des so erhaltenen Pulvers zusammen und stellt sie den Eigenschaften dreier kommerziell erhältlicher Flammschutzmittel auf Basis von Feinstaluminiumhydroxid gegenüber. Das Vergleichsprodukt B wurde dabei auf der Basis des selben filterfeuchten Feinsthydroxides gewonnen wie das erfindungsgemäße Produkt A.

Das erfindungsgemäße Produkt A und die Vergleichsprodukte B, C und D wurden einem Wasseraufnahmetest nach Baumann unterzogen. Die Apparatur und das Messverfahren sind in H. Baumann, GIT -Fachzeitschrift für das Laboratorium, Heft 6, Juni 1967, S.540-542 sowie in H. Baumann, Fette, Seifen, Anstrichmitte, 68, 1966, 741-743 beschrieben. Bild 1) zeigt die Wasseraufnahme der verglichenen Flammschutzmittel in Abhängigkeit von der Versuchsdauer. Die Produkte sind nach 5 - 15min mit Wasser gesättigt. Längere Versuchsdauer führt zu keiner weiteren Erhöhung der Wasseraufnahme. Das erfindungsgemäße Produkt A zeigt eine um mindestens 36% niedrigere Wasseraufnahme als die Vergleichsprodukte. Dieser Wert deckt sich mit den Ölaufnahmewerten. Das Produkt A ist bereits mit 21% (0,21g Ölsäure auf 1g Füllstoff) gesättigt, die kommerziell erhältlichen Produkte sind erst bei 27 - 35% gesättigt.

**Tabelle 1)**

| Eigenschaft | Methode | "4m²/g - Aluminiumhydroxide" | | | |
|---|---|---|---|---|---|
| | | Produkt A | Produkt B | Produkt C | Produkt D |
| d90 (µm) | Lasergranulometrie | 0,5 | 0,5 | 0,6 | 0,6 |
| d50 (µm) | Lasergranulometrie | 1,2 | 1,4 | 1,6 | 1,6 |
| d10 (µm) | Lasergranulometrie | 2,6 | 3,2 | 3,4 | 5,3 |
| BET (m²/g) | DIN 66131 | 3,8 | 3,1 | 3,5 | 4,6 |
| Anteil Böhmit | XRD | 1 % | - | - | - |
| Feuchte (%) | DIN EN ISO 787-2 | 0,19 | 0,19 | 0,24 | 0,23 |
| Ölzahl (%) | DIN EN ISO 787-5 | 21 | 27 | 29 | 35 |
| Wasseraufnahme (ml/g) | nach Baumann | 0,43 | 0,68 | 0,68 | 0,71 |

| | | | | | |
|---|---|---|---|---|---|
| d90 beschreibt den Korngrößenwert, für den gilt, dass 90% aller Partikeln größer sind. | | | | | |
| d50 beschreibt den mittleren Korndurchmesser und damit den Wert, für den gilt, dass 50% aller Partikeln größer und 50% aller Partikeln kleiner sind. | | | | | |
| d10 beschreibt den Korngrößenwert, für den gilt, dass 10% aller Partikeln größer sind. | | | | | |

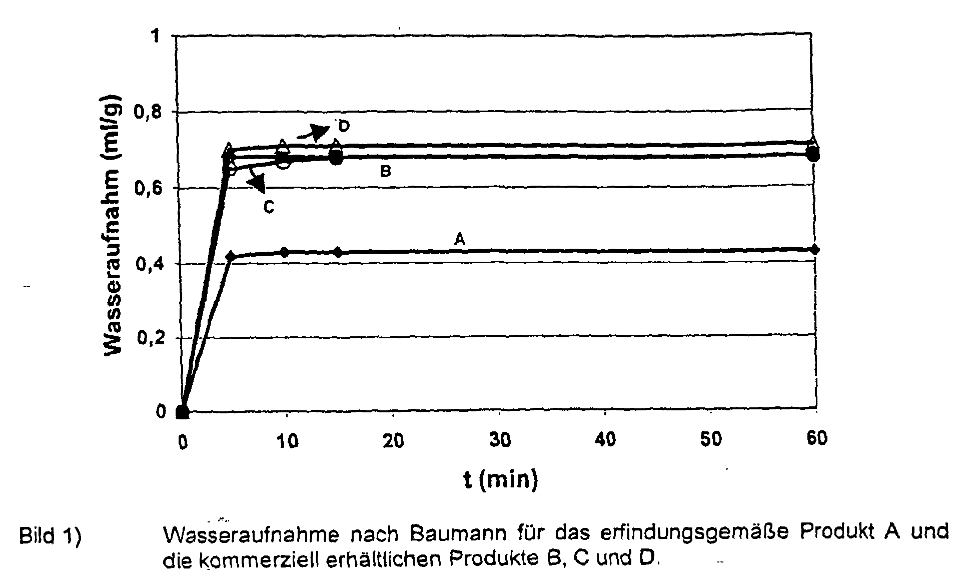

### Beispiel 2)

Der Filterkuchen eines fein kristallisierten Aluminiumhydroxids mit einer spezifischen Oberfläche von ca. 5m²/g und einer Restfeuchte von ca. 53 Gew.-% wurde in ein Mahltrocknungsaggregat über gängige Förderelemente eingebracht. Der Feststoffeintrag betrug 200kg/h. Heißluft mit einer Eintrittstemperatur von 250 - 280°C wurde zugeführt. Die Luftmenge betrug dabei 5000Bm³/h. Die Rotorendrehzahl wurde zwischen 2000 - 3000rpm eingeregelt. Das getrocknete Produkt wurde über ein ausreichend dimensioniertes Produktfilter abgeschieden und über Zellenradschleuse ausgetragen.
Tabelle 2) fasst die wichtigsten Eigenschaften des so erhaltenen Pulvers E zusammen und stellt sie den Eigenschaften des kommerziell erhältlichen Produktes F gegenüber. Zusätzlich sind die Daten eines Produktes G aufgeführt, das auf der Basis des selben filterfeuchten Feinsthydroxides hergestellt wurde wie das erfindungsgemäße Produkt E, allerdings nach dem Verfahren, das dem kommerziell erhältlichen Produkt F zugrunde liegt.

Das erfindungsgemäße Produkt E und das kommerzielle Produkt F sowie Produkt G wurden einem Wasseraufnahmetest nach Baumann unterzogen. Bild 2) zeigt die Wasseraufnahme der beiden Füllstoffe in Abhängigkeit von der Versuchsdauer. Die Produkte sind nach 5 - 15min mit Wasser gesättigt. Längere Versuchsdauer führt zu keiner weiteren Erhöhung der Wasseraufnahme. Das erfindungsgemäße Produkt E zeigt eine um mindestens 27% niedrigere Wasseraufnahme als die Produkte F und G. Dieser Wert deckt sich mit den Ölaufnahmewerten. Das Produkt E ist bereits mit 24%, Produkt F erst bei 34% gesättigt. Auch das Produkt G zeigt mit 31% eine um rund 30% höhere Ölzahl als das erfindungsgemäße Produkt E.

**Tabelle 2)**

| Eigenschaft | Methode | "6m²/g - Aluminiumhydroxide" | | |
|---|---|---|---|---|
| | | Produkt E | Produkt F | Produkt G |
| d90 (µm) | Lasergranulometrie | 0,5 | 0,5 | 0,6 |
| d50 (µm) | Lasergranulometrie | 0,9 | 1,1 | 1,1 |
| d10 (µm) | Lasergranulometrie | 2,6 | 2,7 | 2,4 |
| BET (m²/g) | DIN 66131 | 6,9 | 6,0 | 5,2 |
| Anteil Böhmit | XRD | 1 % | - | - |
| Feuchte (%) | DIN EN ISO 787-2 | 0,19 | 0,40 | 0,26 |
| Ölzahl (%) | DIN EN ISO 787-5 | 24 | 34 | 31 |
| Wasseraufnahme (ml/g) | nach Baumann | 0,77 | 1,00 | 0,98 |

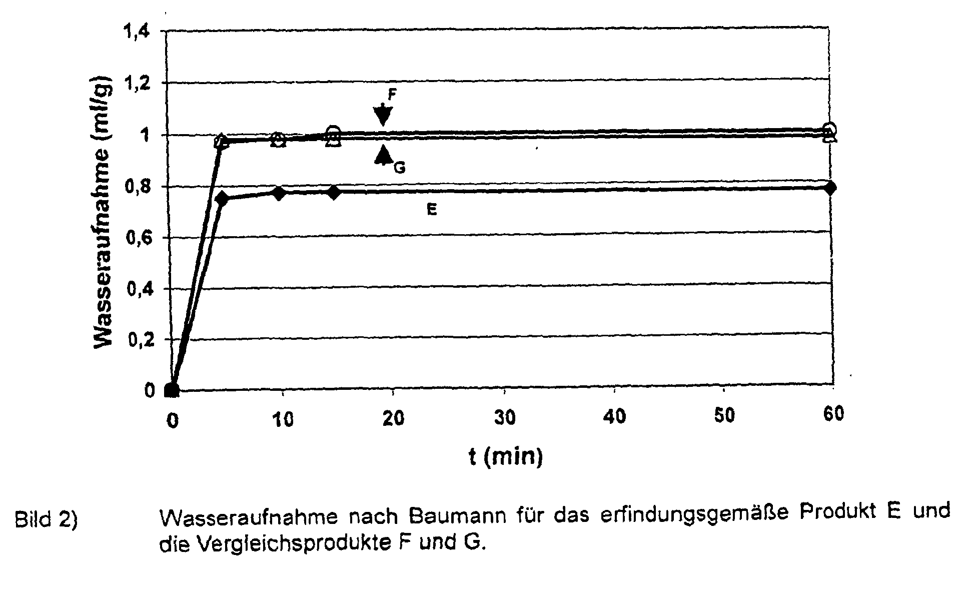

### Beipiel 3)

Das erfindungsgemäße Produkt A und die Vergleichsprodukte B, C und D wurden in Palapreg P17, ein ungesättigtes Polyesterharz, Hersteller BASF AG, eingemischt. Zum Einrühren des Füllstoff wurde ein Rührwerk des Typs IKA-RE 166 verwendet. Es wurden gleiche Massenanteile Palapreg P17 und Füllstoff 3min bei 3500Upm und anschließend nochmals 2min bei 5500Upm eingerührt, so dass sich eine fein verteilte Mischung mit einem Füllgrad von 50 Gew.-% einstellt. Das so erhaltene gefüllte Harz wurde 2h bei 22°C thermostatisiert und anschließend in einem Brookfield RVT Viskosimeter bei 20Upm vermessen (es wurde Spindel 6 verwendet). In Tabelle 3) sind die Ergebnisse gegenübergestellt.

**Tabelle 3)**

| Flammschutzmittel | Absolute Viskosität (Pas) | Relative Viskosität |
|---|---|---|
| Ohne | 3,81 | 1 |
| Produkt A | 32,4 | 8,5 |
| Produkt B | 95,2 | 25,0 |
| Produkt C | 99,0 | 26,0 |
| Produkt D | >200* | - |

| | | |
|---|---|---|
| *hier wurde mit Spindel 7 gemessen und das Ende des Messbereichs erreicht. | | |

Produkt A zeigt die mit Abstand niedrigste Viskosität. Die Produkte B und C sind um den Faktor 3 viskoser, Produkt D lässt sich aufgrund zu hoher Viskosität mit der verwendeten Apparatur nicht mehr vermessen.

### Beispiel 4)

Das erfindungsgemäße Produkt A und die Vergleichsprodukte wurden in ein EVA-Copolymeres mit einem Vinylacetat-Gehalt von 19 Gew.-% eingearbeitet. Der Füllstoff betrug konstant 61,3 Gew.-%, der Gehalt des als Phasenvermittler verwendeten Aminosilans (Dynasylan AMEO, Hersteller Degussa AG) wurde variiert. Die Mischungen wurden auf einem Dispersionskneter Typ LDUK 1,0 der Fa. Werner und Pfleiderer hergestellt. Messungen des Schmelzeindex nach ASTM D 1238 wurden an einem Melt Flow Tester 6942 durchgeführt (190°C/21,6kg). Bild 3) zeigt den Zusammenhang für die erhaltenen Schmelzeindices.

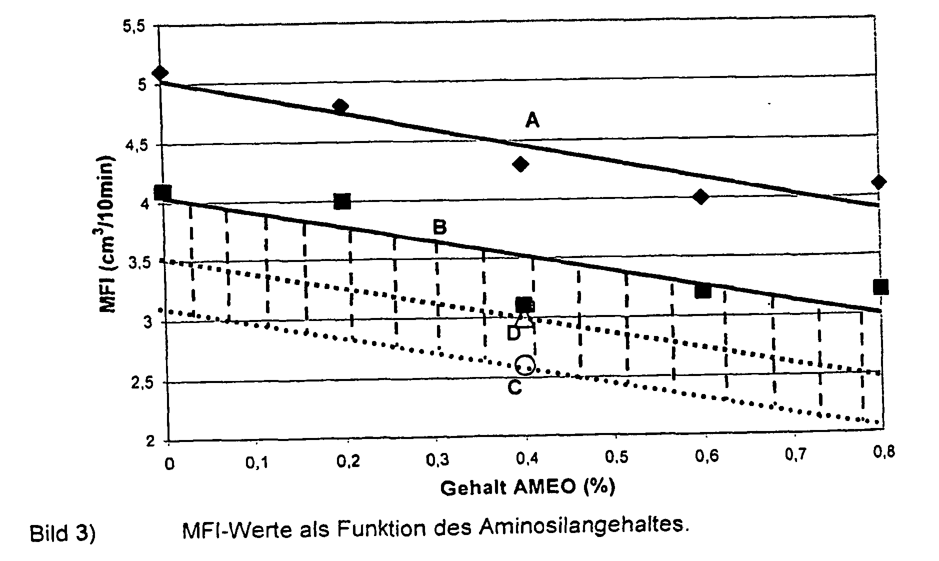

Produkt A zeigt durchgängig die höheren MFI-Werte. Der Verlauf der Werte für die Produkte A, B, C und D ist parallel abfallend mit zunehmenden Aminosilangehalt.

### Beispiel 5) - 10) fassen Untersuchungsergebnisse zusammen, die anhand anwenderrelevanter thermoplastischer Kunststoffcompounds gewonnen wurden.

### Beispiel 5)

Die Tabelle 4) fasst die Zusammensetzung und die wichtigsten Kenndaten von auf einem EVA-Copolymeren mit einem Vinylacetat-Gehalt von 19 Gew.-% basierenden Kunsstoffcompounds zusammen. Die verglichenen Flammschutzmittel sind feinst kristalline Aluminiumhydroxide mit einer spezifischen Oberfläche von ungefähr 4m²/g nach BET. Die drei der erfindungsgemäßen Type gegenübergestellten Aluminiumhydroxid-Quälitäten sind kommerziell erhältliche Produkte.
Die Mischung wurde auf einem Dispersionskneter Typ LDUK 1,0 der Fa. Werner und Pfleiderer hergestellt. Probekörper für die nachfolgenden Untersuchungen wurden aus Platten, die in einer Schwabenthanpresse Typ Polystat 300S im Schmelzepressverfahren hergestellt wurden, herausgestanzt. Die mechanischen Prüfungen nach DIN 53504 wurden an einer Zugprüfmaschine des Typs Tiratest 2705 durchgeführt. Schmelzeindex nach ASTM D 1238 wurden mittels Melt Flow Tester 6942, Sauerstoffindex nach ISO 4589 (ASTM D 2863) an einem FTA der Fa. Stanton Redcroft bestimmt.

**Tabelle 4)**

| Zusammensetzung | 4.1 | 4.2 | 4.3 | 4.4 |
|---|---|---|---|---|
| Escorene UL 00119 | 38,3 | 38,3 | 38,3 | 38,3 |
| Dynasylan AMEO | 0,4 | 0,4 | 0,4 | 0,4 |
| Produkt A | 61,3 | | | |
| Produkt B | | 61,3 | | |
| Produkt C | | | 61,3 | |
| Produkt D | | | | 61,3 |
| Σ | 100 | 100 | 100 | 100 |
| Zugfestigkeit (MPa) | 13,5 | 13,6 | 13,5 | 12,2 |
| Bruchdehnung(%) | 210 | 210 | 193 | 181 |
| LOI (%O₂) | 38,2 | 37,6 | 36,3 | 37,5 |
| MFI (cm³/10min) ; 21,6kg/160°C | 1,6 | 1,1 | 1,0 | 1,2 |
| MFI (cm³/10min) ; 21,6kg/190°C | 4,2 | 3,1 | 2,6 | 3,0 |

| | | | | |
|---|---|---|---|---|
| Escorene UL00119 ist ein EVA-Copolymeres der ExxonMobil. | | | | |
| Dynasylan AMEO ist ein Aminosilan der Degussa AG | | | | |
| Zugfestigkeit aus Spannungs-Dehnungsmessung nach DIN 53504 | | | | |
| Bruchdehnung aus Spannungs-Dehnungsmessung nach DIN 53504 | | | | |
| LOI Limiting oxygen index (Sauerstoffindex) nach ISO 4589 | | | | |
| MFI Melt flow index (Schmelzeindex) nach ASTM D 1238 | | | | |

Der Vergleich zeigt, dass das erfindungsgemäße Produkt A die besten Werte aller verglichenen Produkte liefert. Neben sehr guter mechanischer Eigenschaften ist der Schmelzeindex (MFI) der Formulierung 4.1 um mindestens 35% größer als bei den Vergleichsmaterialien.

### Beispiel 6)

Die Tabelle 5) fasst die Zusammensetzung und die wichtigsten Kenndaten von Kunsstoffcompounds zusammen, die auf einem EVA-Copolymeren mit einem Vinylacetat-Gehalt von 26 Gew.-% basieren. Die verglichenen Flammschutzmittel sind feinst kristalline Aluminiumhydroxide mit einer spezifischen Oberfläche von ungefähr 4m²/g nach BET. Die drei der erfindungsgemäßen Type gegenübergestellten Aluminiumhydroxid-Quälitäten sind kommerziell erhältliche Produkte.
Die Herstellung der Compounds und der Prüfkörper erfolgte wie unter Beispiel 5) beschrieben.

Auch in dieser Formulierung zeigt das erfindungsgemäße Aluminiumhydroxid den mit Abstand höchstens Schmelzeindex. Der Wert ist um mindestens 25% gegenüber den Standard-Qualitäten erhöht (siehe 5.1 verglichen mit 5.2 - 5.4).

**Tabelle 5)**

| Zusammensetzung | 5.1 | 5.2 | 5.3 | 5.4 |
|---|---|---|---|---|
| Escorene UL 00226 | 38,3 | 38,3 | 38,3 | 38,3 |
| Dynasylan AMEO | 0,4 | 0,4 | 0,4 | 0,4 |
| Produkt A | 61,3 | | | |
| Produkt B | | 61,3 | | |
| Produkt C | | | 61,3 | |
| Produkt D | | | | 61,3 |
| Σ | 100 | 100 | 100 | 100 |
| Zugfestigkeit (MPa) | 12,6 | 12,2 | 12,0 | 10,5 |
| Bruchdehnung (%) | 243 | 256 | 221 | 220 |
| LOI (%O₂) | 37,1 | 36,1 | 36,7 | 37,1 |
| MFI (cm³/10min); 21,6kg /160°C | 3,8 | 3,0 | 2,6 | 3,1 |
| MFI (cm³/10min) ; 21,6kg /190°C | 10,6 | 8,5 | 7,0 | 7,2 |

| | | | | |
|---|---|---|---|---|
| Escorene UL00226 ist ein Produkt der ExxonMobil. | | | | |

### Beispiel 7)

Die Tabelle 6) fasst die Zusammensetzung und die wichtigsten Kenndaten von auf einem EVA-Copolymeren mit einem Vinylacetat-Gehalt von 19 Gew.-% basierenden Kunsstoffcompounds zusammen. In diesem Beispiel wurden feinst kristalline Aluminiumhydroxide mit einer spezifischen Oberfläche von ungefähr 6m²/g nach BET verglichen. Die erfindungsgemäßen Type wurde entsprechend dem unter Beispiel 2) beschriebenen Verfahren hergestellt. Gegenübergestellt wurde eine kommerziell erhältliche Aluminiumhydroxid-Qualität.
Die Herstellung der Compounds und der Prüfkörper erfolgte wie unter Beispiel 5) beschrieben.

Auch bei diesem Vergleich zeigen sich die überlegenen Schmelzeeigenschaften des erfindungsgemäßen Produktes E. Neben besseren Bruchdehnungswerten zeigt das erfindungsgemäße Produkt E je nach Messbedingungen um mindestens 68% gegenüber Produkt F erhöhte MFI-Werte.

**Tabelle 6)**

| Zusammensetzung | 6.1 | 6,2 |
|---|---|---|
| Escorene UL 00119 | 38,3 | 38,3 |
| Dynasylan AMEO | 0,4 | 0,4 |
| Produkt E | 61,3 | |
| Produkt F | | 61,3 |
| Σ | 100 | 100 |
| Zugfestigkeit (MPa) | 14,7 | 14,8 |
| Bruchdehnung (%) | 173 | 152 |
| LOI (%O₂) | 42,6 | 42,7 |
| MFI (cm³/10min) ; 21,6kg/160°C | 1,0 | 0,5 |
| MFI (cm³/10min) ; 21,6kg /190°C | 2,7 | 1,6 |

### Beispiel 8)

Die Tabelle 7) fasst die Zusammensetzung und die wichtigsten Kenndaten von auf einem EVA-Copolymeren mit einem Vinylacetat-Gehalt von 26 Gew.-% basierenden Kunsstoffcompounds zusammen. Es wurden die beiden feinst kristalline Aluminiumhydroxide aus Beispiel 7) mit einer spezifischen Oberfläche von ungefähr 6m²/g nach BET verglichen. Die Herstellung der Compounds und der Prüfkörper erfolgte wie unter Beispiel 5) beschrieben.

Wiederum zeigt das erfindungsgemäße Produkt E gute mechanische Eigenschaften, einen hohen LOI Wert und sehr hohe Schmelzeindices.

**Tabelle 7)**

| Zusammensetzung | 7.1 | 7.2 |
|---|---|---|
| Escorene UL 00226 | 38,3 | 38,3 |
| Dynasylan AMEO | 0,4 | 0,4 |
| Produkt E | 61,3 | |
| Produkt F | | 61,3 |
| Σ | 100 | 100 |
| Zugfestigkeit (MPa) | 14,9 | 15,2 |
| Bruchdehnung (%) | 206 | 184 |
| LOI (%O₂) | 42,3 | 40,6 |
| MFI (cm³/10min) ; 21,6kg/160°C | 2,6 | 1,7 |
| MFI (cm³/10min) ; 21,6kg/190°C | 7,3 | 3,9 |

### Beispiel 9)

Die Tabelle 8) fasst die Zusammensetzung und die wichtigsten Kenndaten von auf einem PE/EVA Blend (EVA mit einem Vinylacetat-Gehalt von 26 Gew.-%) basierenden Kunsstoffcompounds zusammen. Die verglichenen Flammschutzmittel sind feinst kristalline Aluminiumhydroxide mit einer spezifischen Oberfläche von ungefähr 4m²/g nach BET. Die drei der erfindungsgemäßen Type gegenübergestellten Aluminiumhydroxid-Quälitäten sind die in Beispiel 4) und Beispiel 5) verwendeten, kommerziell erhältlichen Produkte.
Die Herstellung der Compounds und der Prüfkörper erfolgte wie unter Beispiel 5) beschrieben.

Die Ergebnisse dieses Compounds bestätigen wiederum den in den vorhergehenden Beispielen festgestellten Befund der Schmelzeindexerhöhung.

**Tabelle 8)**

| | | | | |
|---|---|---|---|---|
| Zuammensetzung | 8.1 | 8.2 | 8.3 | 8.4 |
| Exxon Mobile LL 1004 YB | 9,66 | 9,66 | 9,66 | 9,66 |
| Escorene Ultra 00226 | 29 | 29 | 29 | 29 |
| Silquest FR-693 | 0,8 | 0,8 | 0,8 | 0,8 |
| Silquest PA-826 | 0,30 | 0,30 | 0,30 | 0,30 |
| Interox TMCH-75-AL | 0,04 | 0,04 | 0,04 | 0,04 |
| Irganox 1010 | 0,20 | 0,20 | 0,20 | 0,20 |
| Produkt A | 60 | | | |
| Produkt B | | 60 | | |
| Produkt C | | | 60 | |
| Produkt D | | | | 60 |
| Σ | 100 | 100 | 100 | 100 |
| Zugfestigkeit (MPa) | 8,5 | 8,7 | 8,6 | 7,4 |
| Bruchdehnung (%) | 200 | 187 | 143 | 118 |
| LOI (%O₂) | 36,8 | 35,6 | 33,4 | 33,5 |
| MFI (cm³/10min) ; 21,6kg /160°C | 6,8 | 5,2 | 5,1 | 5,0 |

| | | | | |
|---|---|---|---|---|
| Exxon Mobile LL 1004 YB ist ein LLDPE der ExxonMobil | | | | |
| Silquest FR-693 ist ein Vinylsilanester der Osi Specialities | | | | |
| Silquest PA-826 ist ein Vinyl modifiziertes Polydimethylsiloxan | | | | |
| Interox TMCH-75-AL ist eine 75%ige Lösung von tert.-Amylperoxypivalat in Aliphaten, Hersteller Peroxid Chemie | | | | |
| Irganox 1010 ist ein Thermostabilisator der Ciba SC (Pentaerythritol Tetrakis3-(3,5-di-tert-butyl-4-hydroxyphenyl)propionat) | | | | |

### Beispiel 10)

Für die nachfolgenden Untersuchungen wurde als Vergleichsprodukt das mit den besten Vergleichswerten gemäß Tabelle 8 ausgewählt.

Die Tabelle 9) zeigt Ergebnisse der Spannungs-Dehnungs-Versuche und Schmelzeindexbestimmungen an Compounds der Formulierungen 8.1 und 8.2, die über ein gegenüber Beispiel 9) abgeändertes Verfahren hergestellt wurden.
Die Polymermischung wurde in diesem Falle auf einem Buss-ko-Kneter der Type MDK/E 46-11D hergestellt. Probekörper für die mechanischen Prüfungen wurden aus extrudierten Bändern, die auf einem Einschneckenextruder (ED 30-GL der Fa. Extrudex) hergestellt wurden, gestanzt.

Sowohl die mechanischen Werte als auch der Schmelzeindex sind bei dieser Herstellweise gegenüber den in Tabelle 7) genannten Werten verbessert. Auch hier ist der hohe MFI des das erfindungsgemäße Produkt enthaltenden Compounds hervorzuheben.

**Tabelle 9)**

| Eingesetztes Flammschutzmittel | Zugfestigkeit (MPa) | Bruchdehnung (%) | MFI (cm³/10min) ; 21,6kg /160°C |
|---|---|---|---|
| Produkt A | 10,2 | 258 | 9,4 |
| Produkt B | 10,4 | 264 | 5,9 |

Für die beiden so hergestellten Compounds wurden schmelzerheologische Messungen in einem Kapillarrheometer durchgeführt (Fabrikat Bohlin, Typ Rosand RH7-2, Messtemperatur 150°C). Bild 4) zeigt die Scherviskosität als Funktion der Scherrate.

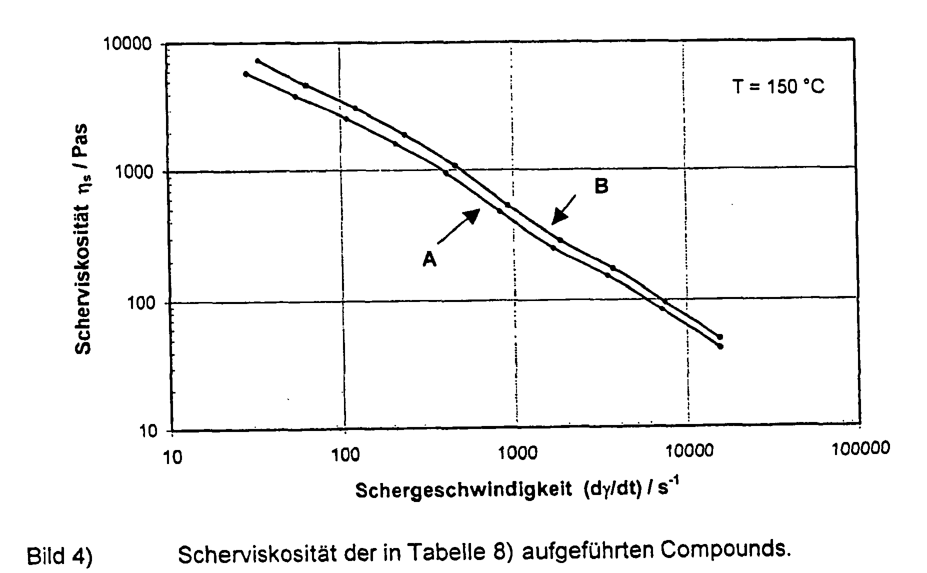

In Übereinstimmung mit den MFI-Werten, zeigt die Zusammensetzung, die das erfindungsgemäße Produkt A enthält, über den gesamten Schergeschindigkeitsbereich eine niedrigere Schmelzeviskosität als das Vergleichsprodukt B.

Beide Kunststoffcompounds wurden zusätzlich auf einen dünnen runden Kupferleiter von 0,5mm² Querschnitt extrudiert. Diese Versuche wurden auf einem Francis Shaw Extruder ausgestattet mit einer BM-Schnecke ("Brevet Maillefer" = Maillefer Patent) durchgeführt. Die wichtigsten Versuchparameter sind in Tabelle 10) aufgeführt.

Das Compound, welches das erfindungsgemäße Aluminiumhydroxid enthält, kann bei gleicher Abzug- bzw. Extrusionsgeschwindigkeit mit niedrigerem Druck und niedrigerer Schmelzetemperatur auf den Kupferleiter aufgebracht werden. Im Umkehrschluss gilt, dass eine erhöhte Abzugsgeschwindigkeit des isolierten Kupferdrahts durch Erhöhung der Schneckendrehzahl auf über 30Upm und damit einer Erhöhung von Schmelzedruck und - temperatur, z.B. auf das Niveau das sich beim das Vergleichsprodukt B enthaltenden Compound und 30Upm Schneckendrehzahl einstellt, möglich ist. Die Versuchsanlage, auf der die hier aufgeführten Versuche durchgeführt wurden, war allerdings nicht auf höhere Abzugsgeschwindigkeiten ausgelegt.

**Tabelle 10)**

| Füllstoff | Fest eingestellte Größen | | | Bei der Extrusion sich einstellende Parameter | |
|---|---|---|---|---|---|
| | Abzugsgeschwindigkeit (m/min) | Schneckendrezahl (rpm) | Düsen-Durchmesser Innen /außen (mm) | Schmelze Temperatur (°C) | Schmelze Druck (bar) |
| Produkt A | 650 | 30 | 0,85/1,4 | 151 | 750 |
| Produkt B | 650 | 30 | 0,85/1,4 | 168 | 800 |

## Patentansprüche

1. Flammgeschützte Polymerzusammensetzung, bestehend aus
a) 20 - 60 Gew.-% eines thermoplastischen und/oder **vernetzten oder vernetzbaren und/oder** elastomeren Polymeren,
und
b) als Flammschutzmittel 40 - 80 Gew.-% entweder eines Aluminiumhydroxids mit den Stoffwerten
- spezifische Oberfläche nach BET 3 - 5 mg²/g
- mittlerer Korndurchmesser d₅₀ 1,0 - 1,5 µm
- Restfeuchte 0,1 - 0,4 %
- Ölzahl 19 - 23 %
- Wasseraufnahme 0,4 - 0,6 ml/g
oder eines Aluminiumhydroxids **mit den Stoffwerten**
- spezifische Oberfläche nach BET 5 - 8 m²/g
- mittlerer Korndurchmesser d₅₀ 0,8 - 1,3 µm
- Restfeuchte 0,1 - 0,6 %
- Ölzahl 21 - 25 %
- Wasseraufnahme 0,6 - 0,8 ml/g

2. Flammgeschützte Polymerzusammensetzung nach Anspruch 1, **dadurch gekennzeichnet, dass** das Aluminiumhydroxid nach 1 b) eine Hydrargillitstruktur mit zusätzlich 0,5 - 1,5 % Böhmit aufweist.

3. Flammgeschützte Polymerzusammensetzung nach Anspruch 1, bei dem das unter a) beschriebene Polymer aus der Gruppe der Polyolefine, Vinylpolymere, Co- oder Terpolymeren sowie gepfropften Polymethylacrylate, Natur- und Synthesekautschuken, und deren Abmischungen besteht.

4. Verwendung einer **flammgeschützten** Polymerzusammensetzung entsprechend einem der Ansprüche 1 - 3 zur Herstellung von beschichteten elektrischen Leitern und Kabeln durch Extrusionsverfahren, **dadurch gekennzeichnet, dass** die Schmelze im Vergleich zu standardmäßig verwendeten Aluminiumhydroxiden einen um mindestens 20 % höheren Schmelzeindex besitzt.

## Claims

1. A flame-proof polymer composition consisting of
a) 20 - 60 % by weight of a thermoplastic and/or cross-linked or cross-linkable and/or elastomer polymer
and
b) in the form of a flame-proofing agent, 40 - 80 % by weight either an aluminium hydroxide with the following physical characteristics:
- specific surface to BET 3 - 5 m²/g
- mean grain diameter d₅₀ 0.8 -1.5 µm
- residual moisture 0.1 to 0.4 %
- oil absorption 19 - 23 %
- Water absorption 0.4 to 0.6 ml/g
or an aluminium hydroxide with the following physical characteristics:
- specific surface to BET 5 - 8 m²/g
- mean grain diameter d₅₀ 0.8 -1.3 µm
- residual moisture 0.1 to 0.6 %
- oil absorption 21 - 25 %
- Water absorption 0.6 to 0.8 ml/g.

2. A flame-proof polymer composition according to claim 1,
**characterised in**
**that** the aluminium hydroxide according to 1 b) comprises a hydrargillite structure with additionally 0.5 to 1.5 % boehmite.

3. A flame-proof polymer composition according to claim 1, wherein the polymer described under a) consists of the group of polyolefins, vinyl polymers, co-or terpolymers as well as grafted polymethyl acrylates, natural and synthetic rubbers and the mixtures of same.

4. Using a flame-proof polymer composition according to any one of claims 1 to 3 for producing coated electric conductors and cables by extrusion,
**characterised in**
**that**, as compared to standard aluminium hydroxides, the melt comprises a melt index which is increased by at least 20 %.

## Revendications

1. Une composition polymère ignifuge, comprenant
a) un pourcentage pondéral de 20 à 60 d'un polymère thermoplastique et/ou d'un polymère réticulé ou apte à la réticulation et/ou de polymères élastomères
et
b) comme agent ignifuge d'un pourcentage pondéral de 40 à 80, soit d'un hydroxyde d'aluminium ayant les caractéristiques de substance suivantes:
- superficie spécifique de la surface selon BET 3 - 5 mg²/g
- diamètre moyen des granules d₅₀ 1,0 - 1,5 µm
- humidité résiduelle 0,1 -0,4 %
- absorption d'huile 19 - 23 %
- absorption d'eau 0,4 - 0,6 ml/g
soit d'un hydroxyde d'aluminium ayant les caractéristiques de substance suivantes:
- superficie spécifique de la surface selon BET 5 - 8 mg²/g
- diamètre moyen des granules d₅₀ 0,8 - 1,3 µm
- humidité résiduelle 0,1 - 0,6 %
- absorption d'huile 21 - 25 %
- absorption d'eau 0,6 - 0,8 ml/g

2. Une composition polymère ignifuge selon la revendication 1, **caractérisé par le fait que** l'hydroxyde d'aluminium, conformément à 1 b), présente une structure d'hydrargylite avec une quantité supplémentaire de boehmite de 0,5 à 1,5 %.

3. Une composition polymère ignifuge selon la revendication 1, dont le polymère décrit sous a) provient du groupe des polyoléfines, des polymères de vinyle, des copolymères ou des terpolymères, ainsi que des polyméthylacrylates implantés, des caoutchoucs naturels ou synthétiques, et de leurs mélanges.

4. Utilisation d'une composition polymère ignifuge selon l'une des revendications 1 à 3 pour la fabrication de conduits et de câbles électriques revêtus par procédé d'extrusion, **caractérisée par le fait que** la fusion, comparée à celle qui est utilisé habituellement pour les hydroxydes d'aluminium, possède un index de fusion supérieur à 20 % au moins.
